Europäisches Patentamt

**European Patent Office**

Office européen des brevets

(11) Numéro de publication : **0 018 907**
**B1**

(12) **FASCICULE DE BREVET EUROPÉEN**

(45) Date de publication du fascicule du brevet :
**28.12.83**

(21) Numéro de dépôt : **80400583.3**

(22) Date de dépôt : **28.04.80**

(51) Int. Cl.³ : **F 16 L 27/10**, **F 16 L 41/00**,
**B 65 D 88/54**

(54) **Réservoir avec des moyens de mise en communication avec un autre réservoir ou une tubulure rigide.**

(30) Priorité : **07.05.79 FR 7911538**

(43) Date de publication de la demande :
**12.11.80 Bulletin 80/23**

(45) Mention de la délivrance du brevet :
**28.12.83 Bulletin 83/52**

(84) Etats contractants désignés :
**BE DE GB IT NL SE**

(56) Documents cités :
**FR-A- 1 444 034**
**US-A- 1 923 124**
**LAPIS, N°. 77, février 1965 " Automatic valve for liquid conduits ", page 26**

(73) Titulaire : **PNEUMATIQUES, CAOUTCHOUC, MANU-
FACTURE ET PLASTIQUES KLEBER-COLOMBES
Société anonyme dite :
Place de Valmy
F-92700 Colombes (FR)**

(72) Inventeur : **Bac, Jean-Claude
Rue Salvador Allende
F-76140 Petit Quevilly (FR)**

Réservoir avec des moyens de mise en communication avec un autre réservoir ou une tubulure rigide

L'invention concerne des réservoirs comportant des moyens de mise en communication avec une canalisation ou avec un autre réservoir. Les dispositifs les plus connus et les plus utilisés pour cette application sont les simples conduites cylindriques, souples ou rigides. Mais il est des cas où elles ne conviennent pas ; par exemple lorsque, comme dans certains hélicoptères, il faut éviter que ces dispositifs de mise en communication se rompent sous l'effet soit d'un choc direct soit d'un choc provoquant le déplacement des réservoirs l'un par rapport à l'autre.

Il est déjà connu d'augmenter la capacité de déformation relative de deux éléments tubulaires à raccorder en les réunissant l'un à l'autre à l'aide de deux replis concentriques (FR-A-1.444.034 ou US-A-1.923.124).

L'objectif essentiel de l'invention est de réaliser une communication entre un réservoir ou une tubulure rigide et qui, sans se rompre, est susceptible de recevoir des chocs et de permettre des déplacements en tous sens des réservoirs dès lors que ces chos et ces déplacements sont d'une intensité ou d'une amplitude inférieures à certaines limites.

Dans ce but, l'invention concerne un réservoir comprenant au moins une paroi souple s'appuyant sur une cloison rigide et relié à un second réservoir ou à une tubulure rigide extérieure par une conduite souple traversant ladite cloison et présentant un repli caractérisé d'une part en ce que le repli est situé du côté intérieur du réservoir et d'autre part en ce que la conduite souple se prolonge extérieurement au-delà de la cloison d'appui pour se raccorder au second réservoir ou à la tubulure rigide, à distance du côté extérieur du premier réservoir.

L'invention est décrite et définie ci-dessous plus en détail au moyen de trois exemples de réalisation illustrés chacun par un schéma représentant une demi-coupe suivant l'axe de la conduite souple mettant le réservoir en communication avec un autre réservoir ou avec une tubulure rigide.

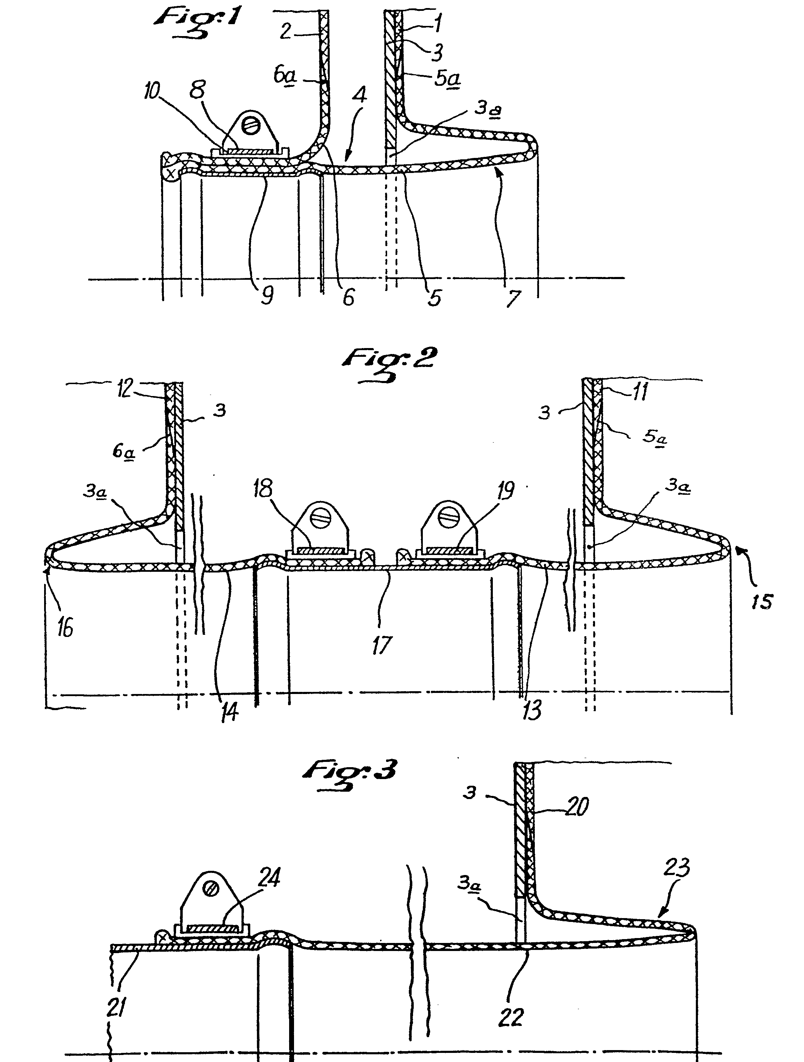

Dans le cas de la figure 1, les deux réservoirs 1 et 2 de carburant d'un hélicoptère sont relativement rapprochés l'un de l'autre. Ils sont en un matériau souple approprié, comme un ensemble constitué de plusieurs couches de tissus enduits d'un élastomère et ils sont séparés l'un de l'autre par une cloison métallique rigide 3, qui appartient à la structure de l'appareil, sur laquelle le réservoir 1 s'appuie ; ces deux réservoirs communiquent l'un avec l'autre.

Pour qu'un choc, par ailleurs insuffisamment violent pour mettre en péril la vie des occupants, ne provoque pas l'embrasement subit de l'appareil, il ne faut pas que se rompe le dispositif mettant les deux réservoirs en communication, même si ces derniers se déplacent ou si une partie métallique est projetée sur ce dispositif.

Dans l'exemple de la figure 1, ce résultat est obtenu en constituant le dispositif 4 de mise en communication des deux réservoirs de deux conduites souples 5 et 6 sensiblement co-axiales raccordées l'une à l'autre et en dotant la conduite 5, qui est liée au réservoir 1 et qui s'étend à l'extérieur de ce dernier, d'un repli 7 situé à l'intérieur du réservoir et tourné vers l'intérieur de ce dernier. Le corps de la conduite souple 5 s'étend ainsi de part et d'autre de la cloison rigide 3 qui sert d'appui à la paroi souple du réservoir 1, en traversant cette cloison par son ouverture 3a.

Le raccordement des conduites 5 et 6 est situé à distance de la cloison 3 et il est librement mobile de façon à éviter ou diminuer les concentrations de contraintes qui en se formant à cet endroit, provoqueraient la déchirure ou la rupture du dispositif.

Dans l'exemple de la figure 1, la conduite 6 qui est liée au réservoir 2 se trouve entièrement à l'intérieur de ce dernier et elle est dirigée vers son intérieur ; la conduite 5 pénètre dans la conduite 6 de façon que le raccordement des deux conduites, qui se fait en les solidarisant l'une à l'autre, soit placé à l'intérieur du réservoir 2. Dans le cas particulier elles sont simplement appliquées l'une sur l'autre grâce à un collier de serrage 8 extérieur à la conduite 6, qui prend appui sur un manchon ou une portion de tubulure métallique 9 intérieur à la conduite 5 ; une bague souple 10 est interposée entre le collier de serrage 8 et la conduite 6 pour protéger cette dernière et les parties latérales du manchon métallique 9 sont profilées de façon à provoquer une sorte d'accrochage mécanique des conduites 5 et 6.

Les conduites souples 5 et 6 sont en un élastomère approprié et elles comportent de préférence une armature telle qu'un tissu de renforcement noyé dans leur paroi.

Dans l'exemple de réalisation, elles apparaissent comme étant une sorte de prolongement de la paroi du réservoir auquel elles sont liées de façon à éliminer un raccordement par superposition de la paroi du réservoir et de la conduite, avec ou sans pièce auxiliaire, qui présenterait le double inconvénient d'augmenter le poids et de constituer une zone fragile en cas de choc. Les conduites 5 et 6 sont par exemple liées à la paroi souple des réservoirs par des jonctions collées en biseau 5a et 6a, bien connues dans l'industrie du caoutchouc. Ces jonctions pourraient être remplacées par des fixations mécaniques équivalentes ou démontables pour faciliter le montage et les réparations éventuelles.

Les conduites 5 et 6 peuvent être dans le même matériau que celui des parois des réservoirs ou dans un matériau différent mais qui est adapté au transport des hydrocarbures et qui présente toutes les autres qualités, par exemple de résistance mécanique, requises. Elles peuvent être réalisées et confectionnées en même temps que les réservoirs, la conduite 6 étant alors confectionnée à l'extérieur du réservoir 2 et ensuite retournée comme un doigt de gant.

Les conduites 5 et 6 sont solidarisées l'une à l'autre lors de la mise en place des réservoirs ; pour ce montage, on peut utiliser l'orifice de visite par lequel le moule a été retiré et extrait après vulcanisation du réservoir.

En cas d'accident, les réservoirs peuvent se déplacer en tous sens dans certaines limites l'un par rapport à l'autre sans qu'il en résulte une rupture de la mise en communication car, grâce au repli 7, la conduite 5 peut s'allonger axialement ou se déformer transversalement sans que les contraintes auxquelles elle est soumise deviennent supérieures à sa résistance mécanique ; il en est de même si le dispositif est soumis à un effort direct, par exemple par suite du choc d'une pièce métallique.

On remarquera que dans ces cas la jonction des conduites 5 et 6 est libre, c'est-à-dire qu'elle flotte et remue librement sans provoquer l'apparition de contraintes.

Enfin, le fait de raccorder les deux conduites simplement en les appliquant mécaniquement l'une sur l'autre sans collage, leur permet au besoin de glisser légèrement et cela recule également l'importance des chocs entraînant la rupture de la communication entre les deux réservoirs.

Dans l'exemple de réalisation de la figure 2, les réservoirs 11 et 12 qui sont mis en communication, sont contenus dans des caissons plus éloignés l'un de l'autre. Chacun est muni d'une conduite souple 13, 14 analogue à la conduite 5 de l'exemple précédent qui traverse la cloison 3 pour déboucher à l'extérieur du réservoir et qui comporte un repli 15, 16 tourné vers l'intérieur du réservoir. Les deux conduites 13 et 14 sont alignées et raccordées par l'intermédiaire d'une tubulure rigide 17 sur laquelle elles sont emmanchées et fixées par les colliers de serrage 18 et 19 à distance des cloisons 3 et entre les deux réservoirs.

En cas de choc, il se produit la même chose que précédemment : allongement des conduites souples grâce aux replis, libre déplacement de la jonction des conduites, éventuellement glissement des conduites sur la tubulure métallique.

Dans l'exemple de réalisation de la figure 3, le réservoir 20 communique avec la tubulure rigide 21 qui lui est extérieure. La conduite souple 22, liée à la paroi souple du réservoir 20, est analogue à la conduite souple 5 du premier exemple : elle comporte un repli 23 situé à l'intérieur du réservoir 20 et tourné vers l'intérieur de ce dernier cette conduite souple 22 est fixée à distance de la cloison 3 sur la tubulure rigide 21 en y étant emmanchée et fermement appuyée grâce au collier de serrage 24.

Comme dans les exemples précédents, si un choc survient, la conduite 22 s'allonge et permet au réservoir 20 et à la tubulure rigide 21 de se déplacer l'un par rapport à l'autre, longitudinalement ou transversalement.

Dans les exemples de réalisation décrits, les réservoirs peuvent être constitués entièrement chacun par une poche souple ou bien ils peuvent être partiellement rigides et avoir au moins une paroi souple sur laquelle est raccordée la conduite souple par l'intermédiaire de son repli intérieur au réservoir. Dans l'un ou l'autre cas la poche ou la paroi souple s'appuie en condition normale sur une paroi rigide ou tout autre moyen équivalent servant à la maintenir en place.

**Revendications**

1. Réservoir comprenant au moins une paroi souple (1) s'appuyant sur une cloison rigide (3) et relié à un second réservoir extérieur (2) ou une tubulure rigide extérieure (21) par une conduite souple (5) traversant ladite cloison et présentant un repli (7), caractérisé d'une part en ce que le repli est situé du côté intérieur du réservoir (1) et d'autre part en ce que la conduite souple (5) se prolonge extérieurement au-delà de la cloison d'appui (3) pour se raccorder au second réservoir ou à la tubulure rigide, à distance du côté extérieur du premier réservoir.

2. Un ensemble de deux réservoirs dans lequel, selon la revendication 1, la conduite souple (5) (13) du premier réservoir (1) (11) est raccordée à distance à une tubulure rigide (9) (17) et dans lequel cette tubulure est raccordée aussi à une conduite souple (6-14) reliée au second réservoir (2-12) caractérisé en ce que ladite tubulure rigide est flottante.

3. Un ensemble de deux réservoirs selon la revendication 2, dans lequel les deux réservoirs sont voisins, caractérisé en ce que les conduites souples (5-6) des deux réservoirs (1-2) sont dirigées vers l'intérieur du second réservoir (2) et sont raccordées l'une à l'autre à l'intérieur du second réservoir.

4. Un ensemble de deux réservoirs selon la revendication 2, dans lequel les deux réservoirs (11-12) sont espacés l'un de l'autre, caractérisé en ce que la tubulure rigide flottante (17) de raccordement des conduites souples (13-14) est située dans l'espace compris entre les deux réservoirs et à distance de ces deux réservoirs.

**Claims**

1. A container comprising at least one flexible side (1) bearing on a rigid wall (3) and connected to a second outer container (2) or to a rigid external pipe (21) via a flexible duct (5) passing through the said wall and having a bend (7), characterised on the one hand in that the bend is situated at the inner side of the container (1), and on the other hand in that the flexible duct (5) is extended outwards beyond the supporting wall (3) for connection to the second container or to the rigid pipe, at a distance from the outside of the first container.

2. A set of two containers in which, according to claim 1, the flexible duct (5) (13) of the first container (1) (11) is connected at a distance to a rigid pipe (9) (17) and in which this pipe is also connected to a flexible duct (6-14) connected to the second container (2-12), characterised in that the said rigid pipe is floating.

3. A set of two containers according to claim 2, in which the two containers are adjacent, characterised in that the flexible ducts (5-6) of the two containers (1-2) are directed towards the inside of the second container (2) and are interconnected within the second container.

4. A set of two containers according to claim 2, in which the two containers (11-12) are mutually spaced apart, characterised in that the rigid floating pipe (17) for connection of the flexible ducts (13, 14) is situated in the space comprised between the two containers and at a distance from these two containers.

**Ansprüche**

1. Behälter mit mindestens einer sich an einer starren Trennwand (3) abstützenden weichen Wand (1), der über einen die Trennwand (3) durchdringenden und eine Falte (7) aufweisenden weichen Schlauch (5) mit einem äußeren zweiten Behälter (2) oder einem äußeren starren Rohr (21) verbunden ist, dadurch gekennzeichnet, daß die Falte (7) im Inneren des Behälters (1) angeordnet ist und daß der weiche Schlauch (5) nach außen über die Stütztrennwand (3) hinaus verlängert ist, damit er im Abstand von der Außenseite des ersten Behälters (1) mit dem zweiten Behälter (2) oder dem starren Rohr (21) verbunden ist.

2. Aus zwei Behältern bestehende Anordnung nach Anspruch 1, wobei der weiche Schlauch (5 ; 13) des ersten Behälters (1 ; 11) im Abstand mit einem starren Rohr (9 ; 17) verbunden ist, das seinerseits mit einem weichen Schlauch (6 ; 14) verbunden ist, der an den zweiten Behälter (2 ; 12) angeschlossen ist, dadurch gekennzeichnet, daß das starre Rohr (9 ; 17) schwebend gelagert ist.

3. Aus zwei Behältern bestehende Anordnung nach Anspruch 2, wobei die beiden Behälter benachbart sind, dadurch gekennzeichnet, daß die weichen Schläuche (5, 6) der beiden Behälter (1, 2) in das Innere des zweiten Behälters (2) gerichtet und im Inneren des zweiten Behälters miteinander verbunden sind.

4. Aus zwei Behältern bestehende Anordnung nach Anspruch 2, wobei die beiden Behälter (11 ; 12) im Abstand voneinander angeordnet sind, dadurch gekennzeichnet, daß das schwebend gelagerte starre Rohr (17) zum Verbinden der weichen Schläuche (13 ; 14) in dem Zwischenraum zwischen den beiden Behältern und im Abstand von diesen angeordnet ist.

*Fig:1*

*Fig:2*

*Fig:3*